# EUROPÄISCHE PATENTSCHRIFT

(11) **EP 0 455 067 B1**
(45) Veröffentlichungstag und Bekanntmachung des Hinweises auf die Patenterteilung: **26.02.2003**
(21) Anmeldenummer: 91106291.7
(22) Anmeldetag: 19.04.1991
(51) Int. Cl.: G01N 21/77, G02B 6/12

(54) **Mikrooptischer Sensor**
Micro-optical sensor
Capteur microoptique

(30) Priorität: 03.05.1990 CH 150190
(43) Veröffentlichungstag der Anmeldung: 06.11.1991
(73) Patentinhaber: F. HOFFMANN-LA ROCHE AG, 4002 Basel (CH)
(72) Erfinder: Fattinger, Christof, Dr., CH-4249 Blauen (CH)
(74) Vertreter: Jung, Michael, Dr.

(56) Entgegenhaltungen:
- WO-A-89/07756
- WO-A-89/09394
- GB-A- 2 209 408
- US-A- 4 262 996
- US-A- 4 815 843
- PATENT ABSTRACTS OF JAPAN vol. 13, no. 93 (P-838)(3441) 06 März 1989, & JP-A-63 276004 (RICOH) 14 November 1988,
- SOVIET PHYSICS TECHNICAL PHYSICS. vol. 34, no. 7, Juli 1989, NEW YORK US Seiten 749 - 752; I.A. AVRUTSKII ET AL: "An efficient grating coupler"
- OPTICS LETTERS. vol. 9, no. 4, April 1984, NEW YORK US Seiten 137 - 139; K. TIEFENTHALER ET AL: "Integrated optical switches and gas sensors"
- FATTINGER CH.: 'The bidiffractive grating coupler' APPLIED PHYSICS LETTERS Bd. 62, Nr. 13, 29 M{rz 1993, Seiten 1460 - 1462
- LEE C.P. ET AL: 'Quantum well infrared photodetectors with bi-periodic grating couplers' APPLIED PHYSICS LETTERS Bd. 61, Nr. 20, 16 November 1992, Seiten 2437 - 2439
- FATTINGER CH.: 'Bidiffractive grating coupler: universal transducer for optical interface analytics' OPTICAL ENGINEERING Bd. 34, Nr. 9, September 1995, Seiten 2744 - 2753

## Beschreibung

Die Erfindung betrifft ein mikrooptisches Verfahren zum Nachweis chemischer Substanzen, bei dem eine die nachzuweisende Substanz enthaltende Probe mit der wellenleitenden Schicht eines optischen Schichtwellenleiters in Kontakt gebracht, Licht in die wellenleitende Schicht eingekoppelt, als Welle in dieser geführt und wieder aus der Schicht ausgekoppelt wird, sowie einen mikrooptischen Sensor zur Durchführung dieses Verfahrens mit einem Schichtwellenleiter aus einem Substrat und einer wellenleitenden Schicht mit der eine die nachzuweisende Substanz in Kontakt gebracht wird, sowie einem an der Schicht ausgebildeten Beugungsgitter zum Ein- und Auskoppeln von Licht.

Chemische Veränderungen, z.B. molekulare Anlagerungen, an oder in unmittelbarer Nähe der wellenleitenden Schicht werden z.B. durch Messen der relativen Intensität der ausgekoppelten Lichtstrahlen nachgewiesen. Eine alternative Nachweismethode besteht darin, zwei kohärente, (z.B. orthogonal polarisierte) Lichtstrahlen simultan in den Schichtwellenleiter einzukoppeln, und durch Interferenz von zwei ausgekoppelten Teilstrahlen, welche von den beiden im Wellenleiter gemeinsam geführten (orthogonal polarisierten) Lichtwellen erzeugt werden, die relative Phasenlage (Phasendifferenz) der beiden (orthogonal polarisierten) ausgekoppelten Lichtstrahlen zu messen.

In der biomedizinischen Diagnostik beruhen viele der gebräuchlichen Testverfahren auf der Verwendung von festen Trägersubstraten, z.B. Kugeln, welche mit einer chemosensitiven molekularen Schicht beladen sind. Für die Analyse wird die Patientenprobe, z.B. Serum oder Plasma, mit dem Trägersubstrat in Kontakt gebracht, wobei in der Probe gelöste nachzuweisende (Bio-)Moleküle eine spezifische Bindung mit der chemosensitiven Schicht eingehen.

Der Nachweis der an die chemosensitive Schicht gebundenen Moleküle erfolgt bei herkömmlichen Tests meist indirekt mit Hilfe eines zweiten in Lösung befindlichen Reaktionspartners, welcher mit einem Radioisotop, einem Fluorophor oder mit einem Enzym markiert ist. Die markierten Moleküle haben die spezifische Eingenschaft, die frei gebliebenen Bindungsstellen auf der chemosensitiven Schicht zu besetzen, oder nach dem sog. "Sandwich"-Prinzip an das freie Ende der chemosensitiv gebundenen, nachzuweisenden Moleküle anzukoppeln. Die Oberflächenkonzentration der markierten Moleküle wird mit einem geeigneten Messverfahren bestimmt. Daraus wird auf die Konzentration der nachzuweisenden Substanz in der Probe geschlossen.

Optische Schichtwellenleiter bestehen aus einer dünnen dielektrischen Schicht auf einem transparenten Trägersubstrat. (Für eine tutorische Einführung siehe z.B. T. Tamir, Integrated Optics, Springer, Berlin 1985). Das die wellenleitende Schicht überdeckende Medium, das sogenannte Superstrat, kann z.B. gasförmig oder flüssig sein. Ein in den Wellenleiter eingekoppelter Lichtstrahl, z.B. ein Laserstrahl, wird durch interne Totalreflexion in der wellenleitenden Schicht geführt, sofern Substrat und Superstrat eine niedrigere Brechzahl aufweisen als die dazwischenliegende dielektrische Schicht. Die Ausbreitung dieser geführten optischen Welle erfolgt in Form diskreter Moden. Die Phasengeschwindigkeit der geführten Lichtwelle beträgt c/N, wobei c die Lichtgeschwindigkeit im Vakuum und N die effektive Brechzahl des im Wellenleiter geführten Modes sind. Die effektive Brechzahl N ist von der Konfiguration des Wellenleiters abhängig, d.h. von Schichtdicke und Brechzahl der dünnen wellenleitenden Schicht sowie von den Brechzahlen von Substrat und Superstrat. Die transversale Feldverteilung der Moden fällt ausserhalb der wellenleitenden Schicht rasch ab. Die effektive Schichtdicke d_{eff} des Wellenleiters ist definiert als Summe der geometrischen Schichtdicke d der wellenleitenden Schicht und den Eindringtiefen der quergedämpften optischen Felder in das Substrat und das Superstrat. Durch Verwendung geeigneter hochbrechender Materialien für die wellenleitende Schicht lassen sich Wellenleiter mit einem d_{eff} von weniger als einer Wellenlänge des geführten Lichtstrahls realisieren. Die Eindringtiefe der quergedämpften Felder in das Substrat und das Superstrat beträgt dabei nur Bruchteile der Wellenlänge.

Das an der Substratoberfläche räumlich stark konzentrierte Feld der geführten Moden eignet sich in idealer Weise zum Abtasten von chemischen Veränderungen, welche an oder in unmittelbarer Nähe der wellenleitenden Schicht stattfinden. Auf einer wellenleitenden Struktur beruhende optische Messverfahren, auch als "integriert-optische" Verfahren bezeichnet, gewinnen für die Oberflächenanalytik und optische Sensorik zunehmend an Bedeutung. Bekannt sind Verfahren, bei welchen Veränderungen der Ausbreitungskonstante (effektive Brechzahl) der geführten Moden, und/oder Aenderungen der Lichtintensität bedingt durch Absorption der geführten Moden ausgenutzt werden, um (chemische) Veränderungen an der Grenzfläche zwischen wellenleitender Schicht und Superstrat und/oder im Volumen der wellenleitenden Schicht nachzuweisen.

Für den selektiven Nachweis spezifischer Substanzen in einer den Wellenleiter überdeckenden Probe ist eine chemosensitive Zusatzschicht auf der wellenleitenden Schicht erforderlich, welche die nachzuweisenden Moleküle selektiv bindet und dadurch z.B. eine Aenderung der effektiven Brechzahl bewirkt. Die Wechselwirkung des geführten Modes mit der Probe erfolgt dabei über das quergedämpfte Feld, dessen Eindringtiefe ins Superstrat typischerweise grösser ist als die Dicke der (molekularen) chemosensitiven Zusatzschicht.

Nach dem bekannten Stand der Technik erfolgt die Einkopplung des Lichtes in den Wellenleiter durch Fokussieren eines Laserstrahls auf dessen Stirnseite, oder mit Hilfe eines Beugungsgitters (sog. Gitterkoppler) wobei der einzukoppelnde Strahl von der Seite des Substrates oder des Superstrates auf die wellenleitende Schicht einfallt. Die stirnseitige Einkopplung stellt hohe Anforderungen an die mechanische Positionierung und Stabilität, insbesondere für extrem dünne, oberflächensensitive Wellenleiter mit einem d_{eff} von weniger als einem Mikrometer. Mit Gitterkopplern lässt sich ein Laserstrahl auf einfache Weise in einen Wellenleiter ein- bzw. auskoppeln, wobei man ohne fokussierende Optik auskommt.

Aus US-A-4,815,843 sind Anordnungen bekannt, bei denen seitlich begrenzte Gitterstrukturen auf der wellenleitenden Schicht für die Ein- bzw. Auskopplung des Strahls verwendet werden. Ein Laserstrahl wird eingekoppelt, sofern er unter einem bestimmten, von der Gitterperiode und der effektiven Brechzahl abhängigen Einfallswinkel auf die mit der Gitterstruktur versehene Region des Wellenleiters auftrifft. Der eingekoppelte Strahl durchläuft z.B. einen zwischen zwei räumlich getrennten Gitterregionen liegenden Abschnitt des Wellenleiters und wird beim Auftreffen auf die zweite Gitterregion ausgekoppelt.

Wird der eingekoppelte Lichtstrahl durch Moleküle, welche sich an der Oberfläche des Wellenleiters befinden, absorbiert, so lässt sich dies durch Messen der Intensität des ausgekoppelten Strahls mit hoher Empfindlichkeit detektieren. Die Kopplung der einfallenden Wellen an die geführte Welle erfolgt im Bereich der Gitterregion. Das Ein- und Auskoppeln über das Gitter hat den Charakter einer Resonanz. Der Resonanzwinkel für optimale Kopplung ist von der Gitterperiode und der effektiven Brechzahl des geführten Modes abhängig. Aenderungen der effektiven Brechzahl, z.B. hervorgerufen durch Anlagerung von Molekülen an der Wellenleiteroberfläche, bewirken eine Verschiebung des Einfallswinkels bzw. des Ausfallswinkels, unter dem das Ein- bzw. Auskoppeln des Laserstrahls erfolgt. Durch Messen des Winkels, unter welchem sich die geführte Welle anregen lässt, kann eine molekulare Oberflächenbelegung in der Gitterregion der wellenleitenden Schicht mit submonomolekularer Empfindlichkeit nachgewiesen werden.

Die räumlich getrennten Gitterregionen können gemäss diesem Dokument durch einen Prägevorgang mit einem Prägestempel erzeugt werden, indem der Schichtwellenleiter so gelagert wird, dass sich beim Prägen dieser oder der Stempel durchbiegt und infolgedessen die Prägung teilweise stark und teilweise schwach erfolgt (vgl. hierzu auch K. Tiefenthaler and W. Lukosz, "Integrated optical switches and gas sensors", Optics Letters vol 9, No. 4, 1984, pp. 137-139).

Aus JP-A-63-276004 ist ein sog. Chirp-Gitter bekannt, das über eine begrenzte Gitterregion eine kontinuierliche Variation der Gitterkonstante aufweist. Solche Gitter sind bezüglich des Koppelwinkels weniger kritisch, eignen sich aber gerade deshalb auch nicht für präzise Winkelmessungen.

Aus Avrutskii, I.A. et al. "An efficient grating coupler", Soviet Physics, 34 (1989), July, No. 7, New York, ist eine Gitteranordnung bekannt, bei der zur Erhöhung der Koppeleffizienz zwei gleiche Gitter mit einer Phasenverschiebung überlagert werden. Das entstehende Gitter besitzt nach wie vor die fundamentale Gitterkonstante der einzelnen Gitter.

Aus WO-A-89/09394 ist ein Wellenleiter-Sensor für die Bestimmung chemischer und biochemischer Substanzen bekannt, bei dem das Problem der Trennung des ein- und des ausgekoppelten Strahls so gelöst ist, dass zusätzlich zu räumlich getrennten Ein- und Auskoppelgittern ein weiteres Gitter vorhanden ist, das die geführte Welle unter einem Winkel reflektiert. Dadurch kann das Einkoppelgitter seitlich versetzt neben dem Auskoppelgitter liegen, und der ausgekoppelte Strahl ist lateral vom eingekoppelten Strahl getrennt.

Ein anderes bekanntes Verfahren zum Nachweis von Adsorbatschichten beruht auf der Anregung von Oberflächenplasmonen an Metallschichtgrenzflächen mit oder ohne Verwendung von Beugungsgittern. Die kohärente Anregung der Leitungselektronen in Form einer an der Metalloberfläche entlanglaufenden Oberflächenwelle wird als Oberflächenplasmon bezeichnet. Das elektromagnetische Feld des Oberflächenplasmons ist transversal zur Metalloberfläche räumlich stark konzentriert. Die transversale Feldverteilung weist ein Maximum an der Oberfläche auf und fällt im Metall und im Superstrat exponentiell ab. Die Plasmonenwelle wird durch Ohmsche Verluste im Metall gedämpft. Die Propagationsdistanz des Oberflächenplasmons beträgt z.B. für reines Silber 22 Mikrometer bei einer Wellenlänge von 514 nm. Adsorbieren Moleküle an der Metalloberfläche, so ändert sich die Ausbreitungskonstante (Phasengeschwindigkeit) des an der Grenzfläche entlanglaufenden Oberflächenplasmons.

Die Empfindlichkeit, mit der sich diese Aenderung der Ausbreitungskonstante nachweisen lässt, ist durch die relativ kurze Propagationsdistanz des Plasmons limitiert. Bekannt sind verschiedene optische Anordnungen, welche die resonante Anregung von Oberflächenplasmonen ausnützen, um molekulare Adsorbatschichten auf Metallober flächen nachzuweisen (vergleiche hierzu B. Liedberg, C. Nylander, and I. Lundstrom, "Surface plasmon resonance for gas detection and biosensing", Sensors and Actuators 4, 1983, pp. 299 -304 und EP 0112721).

Eine universell einsetzbare Methode zur Charakterisierung dünner Schichten auf planaren Oberflächen ist die Ellipsometrie, welche auf der Messung des Polarisationszustandes des an der Oberfläche reflektierten Lichtes beruht. Ein schräg auf die Oberfläche treffender Lichtstrahl erfährt bei der Reflexion eine Aenderung der relativen Amplitude und Phasenlage der parallel und senkrecht zur Einfallsebene polarisierten Komponenten des elektromagnetischen Feldes. Der einfallende Lichtstrahl ist vorzugsweise zirkular oder linear polarisiert. Der Polarisationszustand des im allgemeinen elliptisch polarisierten, reflektierten Strahls wird analysiert, woraus sich die Dicke und Brechzahl der Dünnschicht bestimmen lässt.

Bei einfacher Reflexion des Lichtstrahls an der zu analysierenden Oberfläche sind die von molekularen Adsorbatschichten verursachten Aenderungen des Polarisationszustandes sehr klein, was sich aus der Tatsache erklärt, dass die Wechselwirkung des einfallenden Lichtstrahls mit der Adsorbatschicht auf eine Wegstrecke von der Grössenordnung der Schichtdicke beschränkt ist. Geringfügige Aenderungen des Polarisationszustandes beim Durchgang des einfallenden und reflektierten Strahls durch das mit der Adsorbatschicht belegte Substrat, oder durch eine auf dem Substrat befindliche Küvette, beschränken die Genauigkeit ellipsometrischer Messungen. (Vgl. hierzu R. Azzam et al., Physics in Medicine and Biology 22, 1977, 422-430. P.A. Cuypers et al., Analytical Biochemistry 84, 1978, 56-67).

Der vorliegenden Erfindung liegt die Aufgabe zugrunde, ein hochempfindliches, optisches Messverfahren zur Verfügung zu stellen, mit welchem molekulare Veränderungen an Oberflächen und Grenzflächen auf einfache Weise nachweisbar sind.

Erfindungsgemäss wird diese Aufgabe gelöst durch ein Verfahren der eingangs erwähnten Art, das sich dadurch auszeichnet, dass Ein- und Auskopplung mit Hilfe einer in der Ebene der Schicht liegenden Gitterstruktur mit mindestens zwei Fundamentalkomponenten erfolgt. Die erfindungsgemässe Vorrichtung zur Durchführung des Verfahrens zeichnet sich dadurch aus, dass das Beugungsgitter aus einer Gitterstruktur mit mindestens zwei Fundamentalkomponenten besteht.

Eine Gitterstruktur, deren Frequenzspektrum mehrere Fundamentalkomponenten aufweist wird für den Zweck der vorliegenden Beschreibung auch "multidifiraktiv" genannt. Durch geeignete Wahl der Geometrie der multidiffraktiven Gitterstruktur können die Beugungswinkel und die Intensitäten der einzelnen Beugungsordnungen unabhängig voneinander variiert werden.

Von besonderem Interesse ist hier der bidiffraktive Gitterkoppler, welcher zwei unabhängige Beugungsordnungen aufweist. Die beiden fundamentalen Frequenzkomponenten der bidiffraktiven Gitterstruktur unterscheiden sich vorzugsweise um weniger als einen Faktor zwei voneinander. Bidiffraktive Gitterstrukturen können z.B. durch Ueberlagern von zwei Gittern mit unterschiedlicher Periodizität realisiert werden. Dies kann z.B. mit Hilfe eines zweistufigen lithographischen Prozesses erfolgen, bei welchem in Sequenz zwei Oberflächenreliefgitter unterschiedlicher Periodizität in eine Substratoberfläche geätzt werden.

Gitterkoppler nach bekanntem Stand der Technik bestehen aus einem "klassischen" Beugungsgitter dessen Beugungsordnungen Vielfachen der Fundamentalfrequenz des Gitters zugeordnet sind. Die 1. Beugungsordnung wird dabei von der Fundamentalfrequenz des Gitters erzeugt, welche durch den reziproken Wert der Gitterkonstanten gegeben ist.

Das erfindungsgemässe Verfahren hat den Vorteil, dass mindestens ein ausgekoppelter Teilstrahl erzeugt wird, welcher nicht mit einer direkten Beugungsordnung des auf die Gitterstruktur einfallenden Strahlenbündels zusammenfällt. Die Verwendung einer multidiffraktiven Gitterstruktur ermöglicht es somit, den im Wellenleiter geführten ausgekoppelten Teilstrahl von reflektierten, transmittierten, respektive direkt abgebeugten Teilstrahlen zu separieren, obwohl die Regionen auf der wellenleitenden Schicht, in denen das Ein- und Auskoppeln der Lichtstrahlen erfolgt, teilweise überlappen.

Im folgenden werden anhand der beiliegenden Zeichnungen bevorzugte Ausführungsbeispiele der Erfindung beschrieben. Es zeigen
Fig.1a - 1e schematische Darstellungen verschiedener Formen von Schichtwellenleitern mit multidiffraktiven Gitterkopplern im Schnitt,
Fig.2a und 2b pespektivische Darstellungen von Ausführungsformen von Schichtwellenleitern mit multidiffraktiven Gitterkopplern,
Fig.3a und 3b schematische Darstellungen der optischen Eigenschaften eines bidiffraktiven Beugungsgitters und eines gewöhnlichen Gitters, welches zwei Beugungsordnungen aufweist,
Fig.4 eine schematische Schnittdarstellung eines Sensors nach der Erfindung,
Fig.5 eine schematische Schnittdarstellung einer weiteren Form eines Sensors,
Fig.6 eine Schnittdarstellung eines Sensors mit einem Gitterkoppler ähnlich dem in Fig.1b,
Fig.7 einen Schnitt durch einen Sensor mit einem Gitterkoppler ähnlich dem in Fig.1c,
Fig.8 einen Schnitt durch einen Sensor mit superstratseitiger Lichteinkopplung,
Fig.9 einen Schnitt durch einen Sensor mit einem Gitterkoppler ähnlich dem in Fig. 1c,
Fig.10 einen Schnitt durch einen Sensor mit simultaner superstratseitiger Einkopplung zweier Lichtstrahlen.

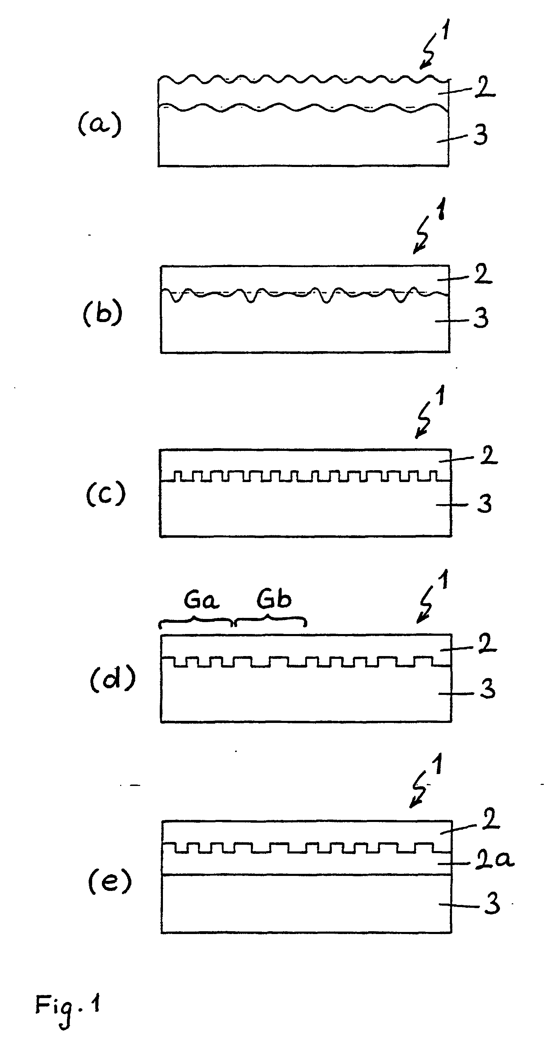

Der in Fig. 1a schematisch im Schnittbild gezeigte Schichtwellenleiter 1 besteht aus einer wellenleitenden Schicht 2 auf einem planaren Substrat 3. Die Oberfläche der wellenleitenden Schicht 2 und die Grenzfläche zwischen wellenleitender Schicht 2 und Substrat 3 sind mit je einem Oberflächen-Reliefgitter moduliert. Die beiden optischen Beugungsgitter können sich auch im Volumen der wellenleitenden Schicht befinden.

Der in Fig. 1b im Schnittbild gezeigte Schichtwellenleiter 1 besteht ebenfalls aus einer wellenleitenden Schicht 2 auf einem Substrat 3. Bei dieser alternativen Form ist aber nur die Grenzfläche zwischen der wellenleitenden Schicht 2 und dem Substrat 3 mit einer biperiodischen Gitterstruktur moduliert. Die biperiodische Gitterstruktur besteht z.B. aus einer Ueberlagerung (Mischung, Superposition) zweier sinusförmiger Gitter mit unterschiedlicher Periodizität.

In ähnlicher Weise besteht der in Fig.1c gezeigte Schichtwellenleiter aus der wellenleitenden Schicht 2 und dem Substrat 3 und einem optischen Beugungsgitter. Die bidiffraktive Eigenschaft des Gitters wird durch geeignete Wahl der Gitterstruktur erreicht. Dabei kann das Profil aufeinander folgender Gitterfurchen in der Breite (Pulsbreitenmodulation) und/oder in der Tiefe (Pulsamplitudenmodulation) periodisch variiert werden. Die Gitterfurchen werden im folgenden auch unter dem Begriff Gitterelemente subsumiert.

Der in Fig. 1d gezeigte Schichtwellenleiter besteht aus einer wellenleitenden Schicht 2 auf einem Substrat 3, wobei wiederum die Grenzfläche mit einer Gitterstruktur moduliert ist. Die Gitterstruktur ist aus alternierenden Abschnitten Gₐ und G_{b} zweier Gitter mit unterschiedlicher Periodizität zusammengesetzt.

In ähnlicher Weise besitzt der in Fig. 1e gezeigte Schichtwellenleiter 1 wiederum eine wellenleitende Schicht 2 und ein Substrat 3, sowie eine bidiffraktive Gitterstruktur. Bei dieser Ausführungsform befindet sich aber zwischen der wellenleitenden Schicht und dem Substrat eine Zwischenschicht 2a, deren Grenzfläche zur wellenleitenden Schicht 2 das Gitter aufweist. Für die Herstellung der Gitterstruktur wird auf das planare Substrat 3 zunächst die Schicht 2a aufgebracht, in welcher mit einem Prägeverfahren ein Oberflächenrelief-Gitter erzeugt wird. Alternativ zum Prägen kann das Oberflächenrelief auch mittels eines mikrolitho-graphischen Prozesses hergestellt werden. Auf das Oberflächenrelief wird die hochbrechende wellenleitende Schicht 2 aufgebracht.

Sowohl die Herstellung eines Mastergitters für das Prägeverfahren wie die Herstellung der multidiffraktiven Gitterstruktur kann auch holographisch erfolgen.

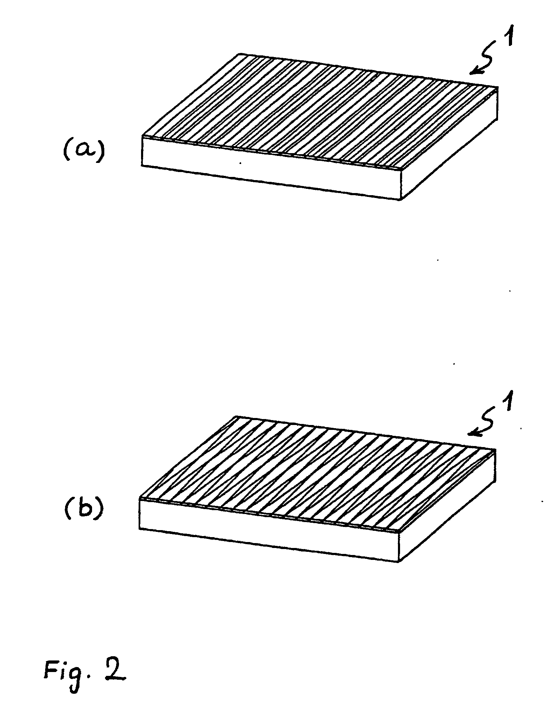

Der in Fig. 2a schematisch perspektivisch dargestellte Schichtwellenleiter 1 ist mit zwei Strichgittern moduliert. Die beiden überlagerten Strichgitter sind parallel zueinander orientiert und weisen unterschiedliche Periodenlängen auf.

Der in Fig. 2b dargestellte Schichtwellenleiter 1 ist ebenfalls mit zwei überlagerten Strichgittern moduliert. Im Unterschied zur Ausführungsform nach Fig. 2a sind aber die überlagerten Strichgitter unterschiedlich orientiert. Derartige Gitter werden als gekreuzte Gitter bezeichnet.

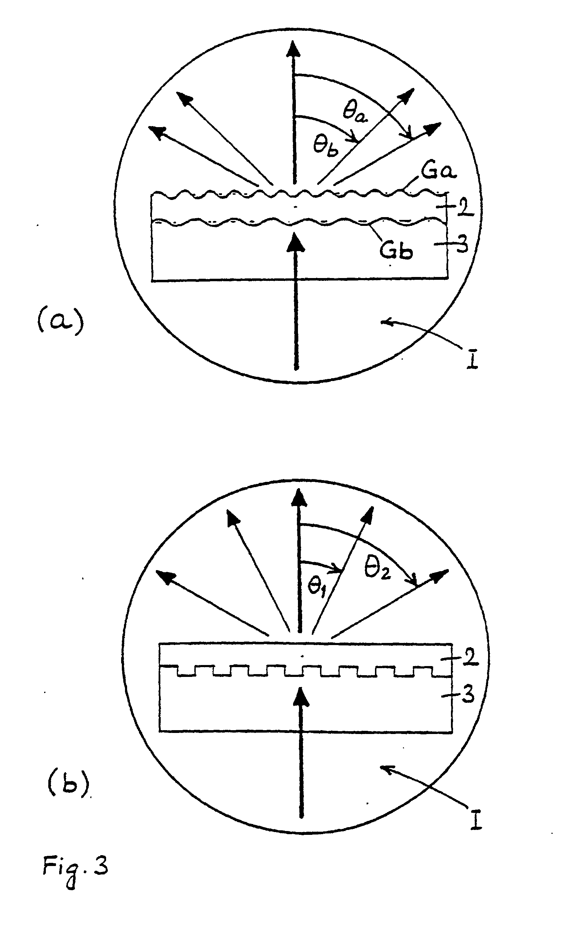

Das Einkoppeln eines Lichtstrahls in die wellenleitende Schicht 2 erfolgt mit Beugungsgittern deren Gitterkonstante kleiner ist als die Vakuumwellenlänge des einzukoppelnden Lichtes. Die Beugungsordnungen derart feiner Gitter sind quergedämpfte (sog. evaneszente) Wellen, welche am Gitter entlanglaufen. Ist der Einfallswinkel richtig gewählt, so wird der auf das Gitter treffende Lichtstrahl über eine dieser evaneszenten Beugungsordnungen in den Wellenleiter eingekoppelt. Wird ein solches Gitter -wie in Fig. 3a und 3b angedeutet- jedoch in eine hochbrechende Immersionsflüssigkeit I eingetaucht (z.B. Diiodmethan mit der Brechzahl n=1.73), so treten anstelle der evaneszenten Wellen frei propagierende Lichtstrahlen auf, deren Beugungswinkel beobachtbar sind.

In Fig. 3a ist die Wirkungsweise eines bidiffraktiven Beugungsgitters anhand eines Beispiels erklärt. Durch Beugung an der Gitterstruktur wird der einfallende Lichtstrahl in mehrere Teilstrahlen aufgespalten. Die unter den Winkeln θₐ und θ_{b} abgebeugten Teilstrahlen werden vom Gitter Gₐ resp. G_{b} erzeugt. Der unabgebeugt durchgehende Strahl entspricht der nullten Beugungsordnung in Transmission. Durch geeignete Wahl der Geometrie der Gitterstruktur können die Beugungswinkel θₐ und θ_{b} der abgebeugten Teilstrahlen unabhängig voneinander gewählt werden.

Fig. 3b zeigt die optischen Eigenschaften eines Gitterkopplers mit einem Beugungsgitter nach bekanntem Stand der Technik. Trifft ein Lichtstrahl auf das Gitter, so treten neben der ersten Beugungsordnung weitere diskrete Ordnungen auf, welche von den höheren Fourierkomponenten (Oberschwingungen) des z.B. rechteckförmigen Gitters hervorgerufen werden. Die Beugungswinkel θⱼ der einzelnen Ordnungen ergeben sich aus der Gitterbeugungsgleichung sin(θⱼ) = j(λ/nl), in welche die Beugungsordnung j, die Vakuumwellenlänge λ, die Brechzahl n des das Gitter umgebenden Mediums I und die Gitterkonstante l (kleiner Buchstabe L) eingeht.

Wird in Fig. 3a und 3b die hochbrechende Immersion durch ein Medium I mit kleinerer Brechzahl n ersetzt (z. B. Wasser mit n=1.33 oder Luft mit n=1), so treten anstelle der abgebeugten Teilstrahlen quergedämpfte Wellen, welche an der Grenzfläche zwischen der wellenleitenden Schicht 2 und dem Medium I entlanglaufen. Der einfallende Lichtstrahl wird in die wellenleitende Schicht 2 eingekoppelt, falls er unter einem bestimmten, von der Gitterperiode und der effektiven Brechzahl des Wellenleiters abhängigen Winkel, auf den Gitterkoppler auftrifft.

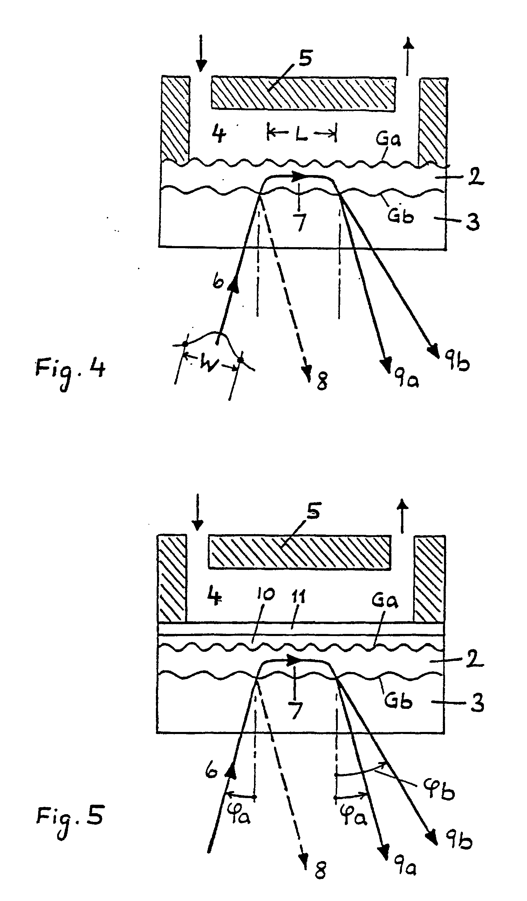

Der in Fig. 4 im Schnitt gezeigte Sensor besteht aus Schichtwellenleiter 1 und einer darauf angebrachten Probenzelle 5 mit Seitenwänden und einer Abdeckung. Die Abdeckung weist Oeffnungen auf, durch die der Innenraum der Probenzelle 5 und damit die sensible Oberfläche des Wellenleiters mit der zu untersuchenden Substanz 4 beschickt wird.

Fig.4 und die folgenden Figuren zeigen auch den Strahlengang des Lichts bei der Messung. Wie Fig.4 zeigt, wird ein substratseitig einfallender Lichtstrahl 6 von einem der beiden Gitter Gₐ und G_{b} teilweise in den Wellenleiter 1 eingekoppelt; der eingekoppelte Teilstrahl 7 durchläuft als geführter Mode die Strecke L der wellenleitenden Schicht 2 und tritt dabei mit der Probe 4 in Wechselwirkung. Die Richtung von einem der beiden ausgekoppelten Teilstrahlen 9a und 9b ist verschieden von der Richtung des an der Schicht reflektierten, nichteingekoppelten Anteils 8 des einfallenden Strahls 6. Der Teilstrahl 8 entspricht der nullten Beugungsordnung in Reflexion. Der Durchmesser des einfallenden Strahls 6 ist der Propagationsdistanz des eingekoppelten Teilstarhls 7 in der wellenleitenden Schicht 2 gepasst. Typischerweise sind die Strahlweite W und die laterale Propagationsstrecke L von ähnlicher Grössenordnung. Die Empfindlichkeit des Sensors ist von der Konfiguration des Wellenleiters abhängig, d.h. von Schichtdicke und Brechzahl der dünnen wellenleitenden Schicht, sowie von den Brechzahlen von Substrat und Superstrat. Für die Detektion von chemischen Veränderungen, welche an oder in unmittelbarer Nähe der wellenleitenden Schicht stattfinden, ist es von Vorteil, wenn die Dicke der hochbrechenden wellenleitenden Schicht 2 kleiner ist als die Wellenlänge des eingekoppelten Lichtes.

Bei dem in Fig. 5 in einem erweiterten schematischen Längsschnitt gezeigten, mit zwei Gittern Gₐ und G_{b} modulierten Schichtwellenleiter auf einem planaren Substrat ist die wellenleitende Schicht 2 mit einer dünnen chemosensitiven Zusatzschicht 10 versehen. Die zu analysierende Probe 4 wird in der Probenzelle 5 mit der chemosensitiven Schicht 10 in Kontakt gebracht. Die Resonanzwinkel ϕa und ϕb, unter welchen die Einkopplung respektive Auskopplung der Lichtstrahlen erfolgt, hängen ab von den Periodenlängen der beiden Gitter, und von der effektiven Brechzahl des im Wellenleiter geführten Modes 7. Die Anlagerung einer molekularen Adsorbatschicht 11 an die chemosensitive Schicht 10 bewirkt eine Aenderungen der effektiven Brechzahl und/oder eine Absorption des geführten Modes.

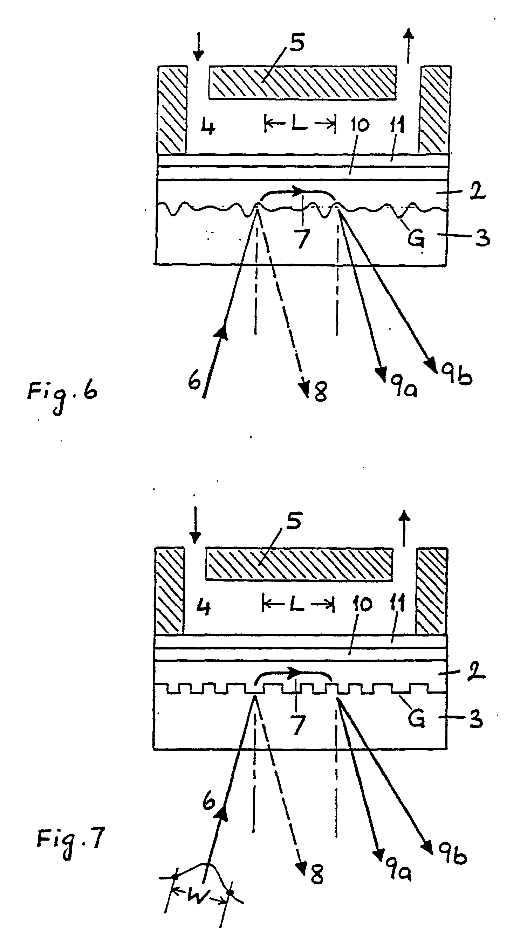

Auch bei dem in Fig. 6 in einem schematischen Längsschnitt gezeigten biperiodisch modulierten Schichtwellenleiter auf einem planaren Substrat mit Probenzelle ist die wellenleitende Schicht 2 mit einer chemosensitiven Zusatzschicht 10 versehen, welche mit der Probe 4 in Kontakt steht. Die Resonanzwinkel für die Ein- bzw. Auskopplung, der Lichtstrahlen hängen ab von den Periodenlängen der beiden Fourierkomponenten des biperiodischen Gitters G, und von der effektiven Brechzahl des im Wellenleiter geführten Modes 7. Die Adsorption einer molekularen Schicht 11 auf der Oberfläche der chemosensitiven Schicht 10 bewirkt z.B. eine Abschwächung durch Absorption des geführten Modes, welche sich durch Messung der Intensität des ausgekoppelten Strahls 9b nachweisen lässt.

Bei dem in Fig. 7 in einem schematischen Längsschnitt gezeigten biperiodisch modulierten Schichtwellenleiter auf einem planaren Substrat mit Probenzelle hängen die Resonanzwinkel für die Ein- bzw. Auskopplung des Lichtes von den Periodenlängen der beiden Gitter in den alternierenden Gitterabschnitten Gₐ und G_{b}, und von der effektiven Brechzahl des im Wellenleiter geführten Modes 7 ab. Die Breite der alternierenden Gitterabschnitte Gₐ und G_{b} mit unterschiedlicher Periodizität (vgl.Fig.1d) ist dabei kleiner als der Durchmesser W des einfallenden Lichtstrahls 6. Die Anlagerung einer molekularen Adsorbatschicht 11 an die chemosensitive Schicht 10 bewirkt eine Aenderungen der effektiven Brechzahl und/oder eine Abschwächung durch Absorption des geführten Modes.

Die bidiffraktive Eigenschaft dieser Struktur beruht darauf, dass der in den Wellenleiter 2 eingekoppelte Mode 7 sowohl mit Gitter Gₐ als auch mit Gitter G_{b} in Wechselwirkung tritt, wobei die ausgekoppelten Teilstrahlen 9a und 9b entstehen.

Für die Reproduzierbarkeit der Messung ist es von Vorteil, wenn der Wirkungsgrad für das Ein- und Auskoppeln des Lichtes unempfindlich ist auf eine Translation des Wellenleiters in der Ebene der Schicht relativ zum einfallenden Lichtstrahl 6. Dies lässt sich in guter Näherung erreichen, indem die Breite der alternierend angeordneten, streifenförmigen Gitterabschnitte Gₐ und G_{b} kleiner gewählt wird als der Durchmesser W (laterale Ausdehnung) des einfallenden, partiell eingekoppelten Lichtstrahls 6.

Da es sich beim Einkoppeln eines Lichtstrahls in einen Wellenleiter um einen Prozess handelt bei dem die Kohärenz des Lichtes eine wichtige Rolle spielt, ist es von Vorteil, wenn auch die Gitterstruktur hohe Kohärenz aufweist. Wie in Figur 1d und 7 angedeutet, ist dies gewährleistet, wenn der Abstand zwischen den Gitterelementen von verschiedenen Gitterabschnitten Gₐ (respektive G_{b}), stets ein ganzzahliges Vielfaches der Periodenlänge des Gittertyps Gₐ (respektive G_{b}) beträgt.

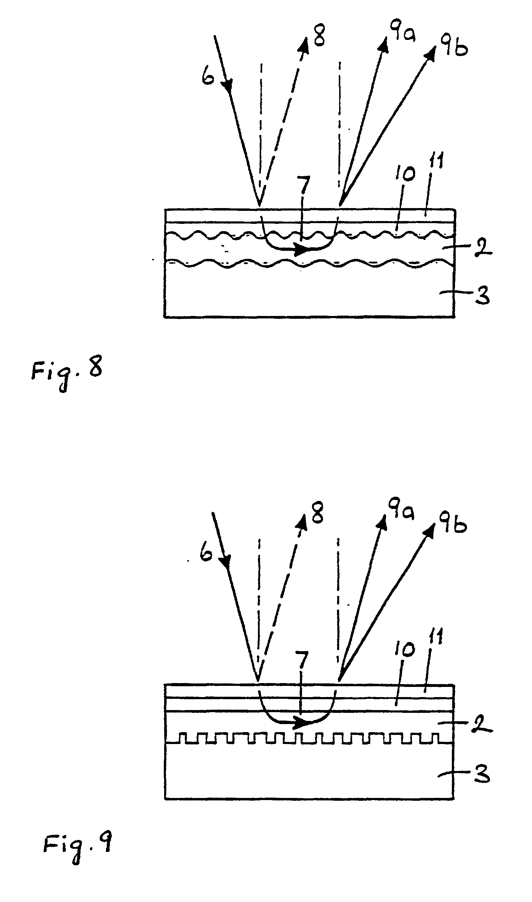

Der in Fig. 8 in einem schematischen Längsschnitt gezeigte Schichtwellenleiter 1, ist mit zwei Gittern moduliert un d mit einer dünnen chemosensitiven Zusatzschicht 10 beladen. Die Resonanzwinkel für die Ein- bzw. Auskopplung, des superstratseitig einfallenden Lichtstrahls 6 hängen ab von den Periodenlängen der beiden Gitter und von der effektiven Brechzahl des im Wellenleiter geführten Modes 7. Das Vorhandensein einer Adsorbatschicht 11 lässt sich z.B. durch Messen der Intensität des ausgekoppelten Teilstrahls 9b quantitativ bestimmen.

Auch bei dem in Fig. 9 im Längsschnitt gezeigten Schichtwellenleiter erfolgt das Ein- und Auskoppeln der Lichtstrahlen superstratseitig. Der einfallende Lichtstrahl 6 wird über eine der vom Gitter erzeugten quergedämpften Wellen eingekoppelt. Der eingekoppelte Anteil 7 durchläuft als geführter Mode die wellenleitende Schicht 2, und wird dabei von der bidiffraktiven Gitterstruktur kontinuierlich wieder ausgekoppelt, wobei die Teilstrahlen 9a und 9b entstehen. Die Ausbreitungsrichtungen der Strahlen 9b und 8 sind verschieden; Strahl 8 entspricht der nullten Beugungsordnung in Reflexion. Diese Richtungsseparation ermöglicht es, durch Messen der Intensität des Strahls 9b das in der wellenleitenden Schicht geführte und ausgekoppelte Licht hintergrundfrei zu detektieren und daraus z.B. auf das Vorhandensein einer absorbierenden Zusatzschicht 11 zu schliessen.

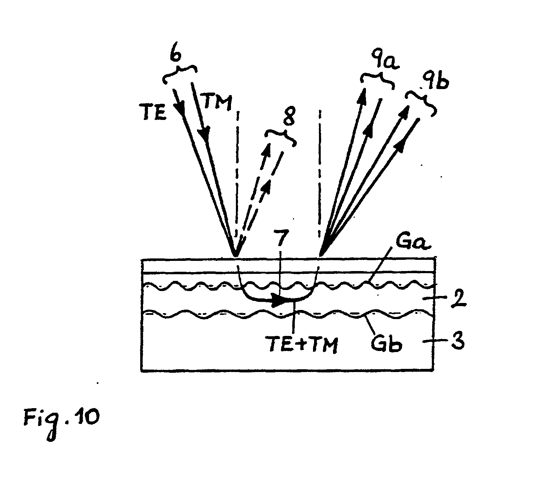

Auch der in Fig. 10 in einem schematischen Längsschnitt gezeigte Schichtwellenleiter ist mit zwei Gittern moduliert und mit einer chemosensitiven Zusatzschicht 10 beladen. Durch simultanes Einkoppeln von zwei kohärenten orthogonal polarisierten Lichtstrahlen werden zwei gemeinsam geführte Moden TE und TM verschiedener Polarisation erzeugt. Die ausgekoppelten Teilstrahlen sind zueinander kohärent und können mit einem Polarisator zur Interferenz gebracht werden. Durch Messen der relativen Phasenlage (Phasendifferenz) von zwei Teilstrahlen, welche von den beiden zueinander orthogonal polarisierten Moden 7 (TE und TM) erzeugt werden, lässt sich das Vorhandensein einer Adsorbatschicht 11 mit sehr hoher Empfindlichkeit nachweisen.

Die chemosensitive Zusatzschicht 10 in Figuren 5-10 ist z.B. eine chemoselektive Schicht.

Eine alternative Nachweismethode besteht darin, die relative Intensität zweier ausgekoppelter Teilstrahlen zu messen; die Einkopplung der beiden Moden 7 in Fig. 10 und die Messung der (relativen) Intensität der Teilstrahlen 9b kann dabei sequentiell erfolgen.

Trifft ein Lichtstrahl, z.B. ein Laserstrahl, auf eine mit einer Gitterstruktur modulierte, wellenleitende Schicht, so treten neben den reflektierten und transmittierten Teilstrahlen weitere diskrete Beugungsordnungen auf, und zwar sowohl in Reflexion als auch in Transmission. Ist der Einfallswinkel richtig gewählt, so wird der Strahl über eine Beugungsordnung in den Wellenleiter eingekoppelt. Der eingekoppelte Teilstrahl breitet sich als geführter Mode in der wellenleitenden Schicht aus und tritt dabei ein zweites mal mit dem Beugungsgitter in Wechselwirkung; der geführte Mode wird beim Durchlaufen des mit der Gitterstruktur modulierten Wellenleiters kontinuierlich wieder ausgekoppelt.

Die Propagationsdistanz, welche für vollständiges Auskoppeln des Modes erforderlich ist, hängt vom Beugungs wirkungsgrad des Gitters ab. Die Gitterregionen, in welchen das Ein- und Auskoppeln erfolgt, sind zueinander versetzt und überlappen teilweise. Wie in Fig. 4 schematisch dargestellt, sind die ausgekoppelten Teilstrahlen 9a und 9b gegenüber dem einfallenden Strahl 6 lateral versetzt. Das Verhältnis von lateralem Versatz L zur Strahlweite W ist vom Profil des auf die wellen-leitende Schicht einfallenden Strahls und vom Beugungswirkungsgrad des Gitters abhängig [vergleiche hierzu T. Tamir and H.L. Bertoni, "Lateral displacement of optical beams at multilayered and periodic structures", J. Opt. Soc. Am. 61 (1971), pp. 1397-1413 und T. Tamir and S.T. Peng, "Analysis and Design of Grating Couplers", Appl. Phys. 14, pp. 235-254 (1977)].

Erfolgt das Ein- und Auskoppeln des im Wellenleiter geführten Modes über ein und dasselbe Gitter, so verlaufen die ausgekoppelten Strahlen parallel zu einer der direkten Beugungsordnungen des einfallenden Lichtstrahls. Durch Verwendung von zwei (oder mehreren) überlagerten Gittern unterschiedlicher Periodizität und/oder Orientierung gelingt es jedoch, einen Lichtstrahl in einen Schichtwellenleiter ein- und auszukoppeln, wobei die Richtung von mindestens einem ausgekoppelten Teilstrahl verschieden ist von den Richtungen der reflektierten, transmittierten, respektive direkt abgebeugten Anteile des einfallenden Lichtstrahls.

In den Figuren 4 bis 10 ist dies für verschiedenartige biperiodische Gitterstrukturen schematisch dargestellt: Der einfallende Lichtstrahl 6 wird über die erste Beugungsordnung des Gitters Gₐ in den Wellenleiter eingekoppelt; der eingekoppelte Strahl 7 durchläuft die wellenleitende Schicht und wird dabei kontinuierlich von den beiden überlagerten Gittern Gₐ und G_{b} ausgekoppelt, so dass zwei Teilstrahlen 9a und 9b mit unterschiedlichen Ausbreitungsrichtungen entstehen. Die Richtungsseparation des im Wellenleiter geführten und ausgekoppelten Lichtstrahls 9b vom reflektierten Anteil 8 des einfallenden Lichtstrahls 6 ermöglicht es, ausgekoppeltes Licht hintergrundfrei z u detektieren, obwohl die Gitterregionen, in welchen das Einkoppeln und Auskoppeln erfolgt, teilweise überlappen.

Wie in der vorstehenden Beschreibung verschiedener Ausführungsformen der Erfindung bereits teilweise erwähnt, laufen bei der Durchführung des Verfahrens folgende Vorgänge ab:
1. Ein optischer Schichtwellenleiter aus einer wellenleitenden Schicht auf einem planaren Substrat, welcher mit einer multidiffraktiven, z.B. biperiodischen, Gitterstruktur moduliert ist, wird superstratseitig mit einer zu analysierenden Probe in Kontakt gebracht. Die multidiffraktive Gitterstruktur besteht z.B. aus zwei Gittern mit unterschiedlicher Periodizität und/oder Orientierung, welche übereinander oder alternierend angeordnet, oder überlagert (superponiert) sind.
2. Mit Hilfe der multidiffraktiven Gitterstruktur werden Lichtstrahlen in den Schichtwellenleiter ein- und ausgekoppelt; dabei werden ausgekoppelte Teilstrahlen erzeugt, deren Ausbreitungsrichtung nicht mit einer direkten Beugungsordnung des auf die Gitterstruktur einfallenden Strahlenbündels zusammenfällt. Insbesondere sind die Richtungen dieser ausgekoppelten Teilstrahlen verschieden von der nullten Beugungsordnung, d.h. von den Richtungen der an der Schicht reflektierten (respektive durch die Schicht transmittierten) Anteile der einfallenden Lichtstrahlen.
3. Obwohl die Regionen auf der wellenleitenden Schicht, in welchen das Ein- und Auskoppeln der Lichtstrahlen erfolgt, teilweise überlappen, kann das an der Schicht reflektierte (respektive durch die Schicht transmittierte) Strahlenbündel von den geführten und aus der Schicht ausgekoppelten Teilstrahlen separiert werden.
4. Die multidiffraktive Gittermodulation der wellenleitenden Schicht ist in der Ebene der Schicht homogen; der Wirkungsgrad für das Ein- und Auskoppeln des Lichtes ist desshalb unempfindlich auf eine Translation des Wellenleiters in der Ebene der Schicht relativ zum einfallenden Lichtstrahl.
5. Die eingekoppelten Lichtstrahlen breiten sich als geführte Moden in der wellenleitenden Schicht aus und treten dabei mit einer chemosensitiven Oberflächenschicht und/oder mit einer Probe in Wechselwirkung, welche superstratseitig den Schichtwellenleiter bedeckt.
6. Chemische Veränderungen (z.B. molekulare Anlagerungen) an oder in unmittelbarer Nähe der wellenleitenden Schicht werden nachgewiesen durch Messen der (relativen) Intensität einer oder mehrerer ausgekoppelter Teilstrahlen.
7. Zwei kohärente (z.B.orthogonal polarisierte) Lichtstrahlen werden mit Hilfe der multidiffraktiven Gitterstruktur simultan in den Schichtwellenleiter ein- und ausgekoppelt, und die ausgekoppelten Teilstrahlen unterschiedlicher Polarisation werden (z.B. mit einem Polarisator) zur Interferenz gebracht. Der Nachweis von chemischen Veränderungen (z.B. molekulare Anlagerungen) an oder in unmittelbarer Nähe der wellenleitenden Schicht erfolgt durch Messung der relativen Phasenlage (Phasendifferenz) von zwei ausgekoppelten Teilstrahlen, welche von den beiden simultan geführten, orthogonal polarisierten, Moden erzeugt werden.
8. Chemische oder physikalische Einwirkungen auf die wellenleitenden Schicht, welche ausserhalb der Ein- und Auskoppelregionen stattfinden, haben keinen Einfluss auf das im Wellenleiter geführte und für die Messung verwendete Licht.
9. Durch Integration verschiedener Messstellen auf der Oberfläche eines multidiffraktiv modulierten Schichtwellenleiters (z.B. in einem 2-dimensionalen Raster) werden auf einem Testsubstrat in einer Probe mehrerer Substanzen parallel oder sequenziell nachgewiesen.

## Patentansprüche

1. Mikrooptisches Verfahren zum Nachweis chemischer Substanzen, bei dem eine die nachzuweisende Substanz enthaltende Probe mit der wellenleitenden Schicht eines optischen Schichtwellenleiters in Kontakt gebracht, kohärentes Licht in die wellenleitende Schicht eingekoppelt, als Welle in dieser geführt und wieder aus der Schicht ausgekoppelt wird,
**dadurch gekennzeichnet, dass**
Ein- und Auskopplung mit Hilfe einer in der Ebene der Schicht liegenden Gitterstruktur aus mindestens zwei überlagerten Gittern mit unterschiedlichen Fundamentalkomponenten erfolgt, so dass beim Auskoppeln des kohärenten Lichts aus dem Schichtwellenleiter Teilstrahlen erzeugt werden können, deren Ausbreitungsrichtung nicht mit einer direkten Beugungsordnung des auf die Gitterstruktur einfallenden Lichts zusammenfällt.

2. Mikrooptischer Sensor zum Nachweis chemischer Substanzen, mit einem Schichtwellenleiter (1) aus einem Substrat (3) und einer darauf befindlichen wellenleitenden Schicht (2), mit der eine die nachzuweisende Substanz enthaltende Probe (4) in Kontakt gebracht wird, sowie einem an der Schicht ausgebildeten Beugungsgitter zum Ein- und Auskoppeln kohärenten Lichts (6),
**dadurch gekennzeichnet, dass**
das Beugungsgitter aus einer Gitterstruktur (G, Ga, Gb) aus mindestens zwei überlagerten Gittern mit unterschiedlichen Fundamentalkomponenten besteht, so dass beim Auskoppeln des kohärenten Lichts aus dem Schichtwellenleiter Teilstrahlen erzeugt werden können, deren Ausbreitungsrichtung nicht mit einer direkten Beugungsordnung des auf die Gitterstruktur einfallenden Lichts zusammenfällt.

3. Mikrooptischer Sensor nach Anspruch 2, **dadurch gekennzeichnet, dass** der Schichtwellenleiter mit einer chemoselektiven Schicht (10) versehen ist.

4. Mikrooptischer Sensor nach Anspruch 2, **dadurch gekennzeichnet, dass** die Gitterstruktur aus mehreren in Abständen parallel zueinander angeordneten Reliefgittern (Ga, Gb) besteht, welche unterschiedliche Periodizität und/oder Orientierung aufweisen.

5. Mikrooptischer Sensor nach Anspruch 2, **dadurch gekennzeichnet, dass** die Gitterstruktur aus mehreren überlagerten Reliefgittern (Ga, Gb) besteht, welche unterschiedliche Periodizität und/oder Orientierung aufweisen.

6. Mikrooptischer Sensor nach Anspruch 2, **dadurch gekennzeichnet, dass** die Gitterstruktur aus parallelen, alternierend angeordneten, streifenförmigen Abschnitten (Gₐ, G_{b}) zweier Gitter zusammengesetzt ist, welche unterschiedliche Periodizität und/oder Orientierung aufweisen.

7. Mikrooptischer Sensor nach Anspruch 6, **dadurch gekennzeichnet, dass** die Breite der alternierend angeordneten, streifenförmigen Gitterabschnitte (Gₐ, G_{b}) kleiner ist als die Propagationsstrecke des im Wellenleiter (2) geführten Modes (7) innerhalb welcher das Ein- und Auskoppeln erfolgt.

8. Mikrooptischer Sensor nach Anspruch 6, **dadurch gekennzeichnet, dass** die einzelnen streifenförmigen Gitterabschnitte (Ga, Gb) mit gleicher Periodizität und gleicher Orientierung relativ zueinander so angeordnet sind, dass der Abstand zwischen Gitterelementen von verschiedenen Gitterabschnitten (Ga,Gb) gleicher Periodizität und gleicher Orientierung, stets ein ganzzahliges Vielfaches der Periodenlänge dieses Gittertyps beträgt.

9. Mikrooptischer Sensor nach Anspruch 2, **dadurch gekennzeichnet, dass** die Breite der Gitterelemente periodisch variiert.

10. Mikrooptischer Sensor nach Anspruch 2, **dadurch gekennzeichnet, dass** die Tiefe der Gitterelemente periodisch variiert.

11. Mikrooptischer Sensor nach Anspruch 2, **dadurch gekennzeichnet, dass** die Gitterstruktur (G) aus einem Reliefgitter besteht, dessen Herstellung mit Hilfe eines mehrstufigen lithographischen Prozesses erfolgt, bei welchem in Sequenz mehrere Oberflächenreliefgitter unterschiedlicher Periodizität und/oder Orientierung in eine Substratoberfläche geätzt werden.

12. Mikrooptischer Sensor nach Anspruch 2, **dadurch gekennzeichnet, dass** die multidiffraktive Gitterstruktur (G) holographisch hergestellt wird.

13. Mikrooptischer Sensor nach Anspruch 2, **dadurch gekennzeichnet, dass** die Gitterstruktur (G) mit Hilfe eines Prägeverfahrens von einem Mastergitter auf die Oberfläche eines Substrates übertragen wird, auf welches die hochbrechende wellenleitende Schichte (2) aufgebracht wird.

14. Mikrooptischer Sensor nach Anspruch 9, **dadurch gekennzeichnet, dass** die Herstellung des multidiffraktiven Mastergitters mit Hilfe eines mehrstufigen lithographischen Prozesses oder holographisch erfolgt.

15. Mikrooptischer Sensor nach Anspruch 2, **dadurch gekennzeichnet, dass** die Dicke der wellenleitenden Schichte (2) kleiner ist als die Wellenlänge des eingekoppelten Lichtes.

16. Mikrooptisches Verfahren nach Anspruch 1, **dadurch gekennzeichnet, dass** mehrere Lichtstrahlen (6,9) in den Schichtwellenleiter (1) ein- und ausgekoppelt werden deren relative Intensität gemessen wird.

17. Mikrooptisches Verfahren nach Anspruch 16, **dadurch gekennzeichnet, dass** die Lichtstrahlen (6,9) unterschiedliche Polarisation aufweisen.

18. Mikrooptisches Verfahren nach Anspruch 16, **dadurch gekennzeichnet, dass** die Lichtstrahlen (6,9) unterschiedliche Wellenlängen aufweisen.

19. Mikrooptisches Verfahren nach Anspruch 1, **dadurch gekennzeichnet, dass** mehrere zueinander kohärente Lichtstrahlen (6,9) in den Schichtwellenleiter ein- und ausgekoppelt werden deren relative Phasenlage gemessen wird.

20. Mikrooptisches Verfahren nach Anspruch 19, **dadurch gekennzeichnet, dass** die Lichtstrahlen (6,9) unterschiedliche Polarisation aufweisen.

## Claims

1. Microoptical method for the detection of chemical substances in which a sample containing the substance to be detected is contacted with the waveguiding layer of an optical layer waveguide, coherent light is coupled into the waveguiding layer, guided in this layer as a wave and then coupled out of the layer,
**characterized in that**
the light is coupled in and out with the aid of a grating structure located in the plane of the layer and consisting of at least two superimposed gratings having different fundamental components in such a manner that partial beams can be generated when the coherent light is coupled out of the layer waveguide and the direction of propagation of the said partial beams does not coincide with a direct diffraction order of the light incident on the grating structure.

2. Microoptical sensor for the detection of chemical substances having a layer waveguide (1) consisting of a substrate (3) and a waveguiding layer (2) located thereon which is contacted with a sample (4) containing the substance to be detected and also comprising a diffraction grating formed on the layer for coupling coherent light (6) in and out,
**characterized in that**
the diffraction grating is composed of a grating structure (G, Ga, Gb) consisting of at least two superimposed gratings having different fundamental components such that partial beams can be generated when the coherent light is coupled out of the layer waveguide and the direction of propagation of the said partial beams does not coincide with a direct diffraction order of the light incident on the grating structure.

3. Microoptical sensor as claimed in claim 2,
**characterized in that**
the layer waveguide is provided with a chemoselective layer (10).

4. Microoptical sensor as claimed in claim 2,
**characterized in that**
the grating structure is composed of several relief gratings (Ga, Gb) spaced parallel to one another which have a different periodicity and/or orientation.

5. Microoptical sensor as claimed in claim 2,
**characterized in that**
the grating structure is composed of several superimposed relief gratings (Ga, Gb) which have a different periodicity and/or orientation.

6. Microoptical sensor as claimed in claim 2,
**characterized in that**
the grating structure is composed of strip-like sections (Ga, Gb) of two gratings that are arranged alternately in parallel and have a different periodicity and/or orientation.

7. Microoptical sensor as claimed in claim 6,
**characterized in that**
the width of the alternately arranged strip-like grating sections (Ga, Gb) is less than the propagation path of the mode (7) guided in the waveguide (2) within which the incoupling and outcoupling occurs.

8. Microoptical sensor as claimed in claim 6,
**characterized in that**
the individual strip-like grating sections (Ga, Gb) having the same periodicity and the same orientation are arranged relative to one another in such a manner that the distance between the grating elements of different grating sections (Ga, Gb) of the same periodicity and the same orientation is always an integral multiple of the periodic length of this type of grating.

9. Microoptical sensor as claimed in claim 2,
**characterized in that**
the width of the grating elements varies periodically.

10. Microoptical sensor as claimed in claim 2,
**characterized in that**
the depth of the grating elements varies periodically.

11. Microoptical sensor as claimed in claim 2,
**characterized in that**
the grating structure (G) is composed of a relief grating which is manufactured with the aid of a multistep lithographic process in which several surface relief gratings of different periodicity and/or orientation are etched in sequence into a substrate surface.

12. Microoptical sensor as claimed in claim 2,
**characterized in that**
the multidiffractive grating structure (G) is manufactured by holography.

13. Microoptical sensor as claimed in claim 2,
**characterized in that**
a embossing process is used to transfer the grating structure (G) from a master grating onto the surface of a substrate on which the highly refractive waveguiding layer (2) is applied.

14. Microoptical sensor as claimed in claimed 9,
**characterized in that**
the multidiffractive master grating is manufactured by a multistep lithographic process or by holography.

15. Microoptical sensor as claimed in claim 2,
**characterized in that**
the thickness of the waveguiding layer (2) is less than the wavelength of the incoupled light.

16. Microoptical sensor as claimed in claim 1,
**characterized in that**
several light beams (69) are coupled into and out of the layer waveguide (1) and the relative intensity of the said light beams is measured.

17. Microoptical sensor as claimed in claim 6,
**characterized in that**
the light beams (69) have a different polarization.

18. Microoptical sensor as claimed in claim 6,
**characterized in that**
the light beams (69) have different wavelengths.

19. Microoptical method as claimed in claim 1,
**characterized in that**
several mutually coherent light beams (69) are coupled into and out of the light waveguide and the relative phase of the said light beams is measured.

20. Microoptical method as claimed in claim 19,
**characterized in that**
the light beams (69) have a different polarization.

## Revendications

1. Procédé microoptique pour la détection de substances chimiques, dans lequel un échantillon contenant la substance à détecter est placé en contact avec la couche conductrice d'ondes d'un guide d'ondes optique de couches, dans lequel une lumière cohérente est couplée dans la couche conductrice d'ondes, cette lumière étant guidée comme onde dans cette couche et à nouveau découplée à la sortie de la couche,
**caractérisé en ce qu'**un processus de couplage et de découplage est effectué à l'aide d'une structure réticulaire se trouvant dans le plan de la couche, laquelle structure réticulaire se compose d'au moins deux réseaux superposés ayant des composantes fondamentales différentes, de sorte que lors du découplage de la lumière cohérente sortant du guide d'ondes de couches, des faisceaux partiels peuvent être produits dont la direction de propagation ne coïncide pas avec un ordre de diffraction direct de la lumière incidente sur la structure réticulaire.

2. Capteur microoptique pour la détection de substances chimiques, comprenant un guide d'ondes de couches (1) se composant d'un substrat (3) et d'une couche (2) conductrice d'ondes se trouvant sur le substrat, couche avec laquelle est placé en contact un échantillon (4) contenant la substance à détecter, ainsi que d'un réseau de diffraction formé sur la couche pour le couplage et le découplage d'une lumière cohérente (6),
**caractérisé en ce que** le réseau de diffraction d'une structure réticulaire (G, Ga, Gb) se compose au moins de deux réseaux superposés ayant des composantes fondamentales différentes, de sorte que des faisceaux partiels peuvent être produits lors du découplage de la lumière cohérente à la sortie du guide d'ondes de couches, faisceaux partiels dont la direction de propagation ne coïncide pas avec un ordre de diffraction direct de la lumière incidente sur la structure réticulaire.

3. Capteur microoptique selon la revendication 2,
**caractérisé en ce que** le guide d'ondes de couches est doté d'une couche (10) chimiosélective.

4. Capteur microoptique selon la revendication 2,
**caractérisé en ce que** la structure réticulaire se compose de plusieurs réseaux en relief (Ga, Gb) disposés en étant parallèles entre eux et en étant espacés, lesquels réseaux en relief présentent une périodicité et/ou une orientation différentes.

5. Capteur microoptique selon la revendication 2,
**caractérisé en ce que** la structure réticulaire se compose de plusieurs réseaux en relief (Ga, Gb) superposés qui présentent une périodicité et/ou une orientation différentes.

6. Capteur microoptique selon la revendication 2,
**caractérisé en ce que** la structure réticulaire est composée de parties (Ga, Gb) de deux réseaux, en forme de bandes et disposées de façon parallèle et alternée, lesquelles parties de réseaux présentent une périodicité et/ou une orientation différentes.

7. Capteur microoptique selon la revendication 6,
**caractérisé en ce que** la largeur des parties de réseaux (Ga, Gb) en forme de bandes et disposées de façon alternée est plus petite que la trajectoire de propagation du faisceau (7) guidé dans le guide d'ondes (1), trajectoire de propagation à l'intérieur de laquelle se produit le processus de couplage et de découplage.

8. Capteur microoptique selon la revendication 6,
**caractérisé en ce que** les différentes parties de réseaux (Ga, Gb) en forme de bandes, ayant une même périodicité et une même orientation sont disposées l'une par rapport à l'autre de façon telle, que la distance entre des éléments de différentes parties de réseaux (Ga, Gb) de même périodicité et de même orientation est toujours un multiple entier de la longueur de période de ce type de réseaux.

9. Capteur microoptique selon la revendication 2,
**caractérisé en ce que** la largeur des éléments de réseaux varie périodiquement.

10. Capteur microoptique selon la revendication 2,
**caractérisé en ce que** la profondeur des éléments de réseaux varie périodiquement.

11. Capteur microoptique selon la revendication 2,
**caractérisé en ce que** la structure réticulaire (G) se compose d'un réseau en relief dont la fabrication a lieu à l'aide d'un processus lithographique à plusieurs niveaux, processus au cours duquel plusieurs réseaux superficiels en relief, de périodicité et/ou d'orientation différentes, sont décapés successivement pour former une surface de substrat.

12. Capteur microoptique selon la revendication 2,
**caractérisé en ce que** la structure réticulaire (G) à diffraction multiple est fabriquée de manière holographique.

13. Capteur microoptique selon la revendication 2,
**caractérisé en ce que** la structure réticulaire (G) est déplacée sur la surface d'un substrat, à l'aide d'un procédé de matriçage d'un réseau maître, substrat sur lequel est appliquée la couche (2) conductrice d'ondes à forte réfraction.

14. Capteur microoptique selon la revendication 9,
**caractérisé en ce que** la fabrication du réseau maître à diffraction multiple a lieu à l'aide d'un processus lithographique à plusieurs niveaux ou de manière holographique.

15. Capteur microoptique selon la revendication 2,
**caractérisé en ce que** l'épaisseur de la couche (2) conductrice d'ondes est plus petite que la longueur d'ondes de la lumière couplée.

16. Procédé microoptique selon la revendication 1,
**caractérisé en ce que** plusieurs faisceaux lumineux (6, 9) sont couplés et découplés dans le guide d'ondes de couches (1), faisceaux lumineux dont on mesure l'intensité relative.

17. Procédé microoptique selon la revendication 16,
**caractérisé en ce que** les faisceaux lumineux (6, 9) présentent une polarisation différente.

18. Procédé microoptique selon la revendication 16,
**caractérisé en ce que** les faisceaux lumineux (6, 9) présentent des longueurs d'ondes différentes.

19. Procédé microoptique selon la revendication 1,
**caractérisé en ce que** plusieurs faisceaux lumineux (6, 9) cohérents l'un par rapport à l'autre sont couplés et découplés dans le guide d'ondes de couches, faisceaux lumineux dont on mesure la position de phase relative.

20. Procédé microoptique selon la revendication 19,
**caractérisé en ce que** les faisceaux lumineux (6, 9) présentent une polarisation différente.
